# EUROPEAN PATENT APPLICATION

(11) **EP 2 803 387 A2**
(43) Date of publication of application: **19.11.2014**
(21) Application number: 14167554.6
(22) Date of filing: 08.05.2014
(51) Int. Cl.: A62B 23/04

(54) **Filter assembly for nuclear, biological and chemical (NBC) air filtration system and method of manufacture thereof**

(30) Priority: 13.05.2013 IL 22635713
(71) Applicant: Beth-El Zikhron-Ya'aqov Industries, Ltd., 30900 Zikhron Yaakov (IL)
(72) Inventor: Schneider, Jonathan, 30500 Binyamina (IL)
(74) Representative: Hartley, Andrew Philip

(57) **Abstract**

An NBC filter assembly (30) has a casing (31) having first and second ends (31a, 31b) supporting an air inlet (32) and an air outlet (33), respectively. Mounted in proper spaced relationship with the air inlet are a particulate filter (34) and an adsorption filter (35) having a perforated air inlet plate (36) facing the particulate filter. At least one spring (39) independent of the casing that has a first end supported within the first end of the casing and a floating second end is adapted to apply pressure to the perforated air inlet plate of the adsorption filter when the casing is sealed.

## Description

### FIELD OF THE INVENTION

This invention relates to air filters for a "safe room" that is impermeable to nuclear, chemical and biological (NBC) substances and is also referred to in Israel by the acronym "MAMAD".

### BACKGROUND OF THE INVENTION

Israel has required that from 2012 all new safe rooms built require an NBC air filtration system meeting the requirements of the requisite standard. Previously, although safe rooms were mandatory there was no requirement that the safe room be permanently equipped with an NBC air filtration system and the idea prevailed to have a kit of components that can be stored somewhere in the safe room and then reinstalled in the times of emergency. According to the current standard, use of a kit is no longer tolerated because the security experts see a high risk that the systems will not be ready and functional in the moment of emergency. A compact and always fully functional system is now mandatory.

Whereas previously the focus was on handy assembly of single components, in the new regulation the focus is on a permanently installed system with all required components included and "ready to be operated." As a result, the system is visible all the time and presents an obstacle during regular use of the safe room. It will be borne in mind that the safe room is a not a reinforced bomb-shelter that is set aside for emergency use only, but a regular room that finds daily use typically as a salon or living room. These considerations impose the need to have a small unit and an acceptable compact design that renders the system as unobtrusive as possible. During storage and use the system should require as little space as possible. This requirement dictates that the components of the filter assembly be reduced in size.

US Patent 4,543,112 discloses a sorbent filter assembly made by placing a first resilient perforated plate, a first retention filter, a sorbent bed, a second retention filter, a second resilient perforated plate, and a cover within the cylindrical portion of a canister shell. The cover is forced downwardly to compress the sorbent bed and to resiliently spring bias or stress the first resilient perforated plate. While the parts are held together under compression, an annular edge portion of the cylindrical shell is rolled into a circumferentially extending groove on the canister cover to hermetically seal and mechanically hold the parts together in their assembled and compressed relationship.

The filter disclosed in US Patent 4,543,112 is a replacement screw-on cartridge for a gas mask and is relevant to the present invention to the extent that it thus relates to an NBC filter that includes a particulate filter and an adsorption filter retained inside a casing. The adsorption filter contains a filter bed typically formed of charcoal granules that must be maintained under a pressure of at least 5kN/m² in order to be effective and withstand knocks and vibrations caused, for example, by accidental dropping that might dislodge the charcoal granules and thus derogate from the effectiveness of the filter. The surface area of the filter bed in a gas mask filter cartridge is small, typically between 80-130 mm and has a volume of approximately 0.3-0.5 liters. Consequently, the force required to apply the required pressure is commensurately low. In US Patent 4,543,112 the sorbent bed is disposed between two resilient perforated plates and the requisite force is applied by a rim of the canister cover, which snap-fits to the canister. In doing so, it exerts circumferential pressure to the nearer resilient perforated plate, which is thereby resiliently flexed and compresses the sorbent bed.

However, in NBC filters of the type with which the present invention is concerned, the filter assembly is a massive structure that is typically built into a wall and has a volume in the order of 20 liters and an air flow of between 24 and 50 m³/h. An NBC air filtration system with which such filters are used typically comprises a blast protection valve, fine dust filter, particulate filter, adsorption filter, blower, manual backup system and over pressure regulation valve. The particulate filter and adsorption filter are integrated into the filter assembly often called "NBC filter", whose air intake may then be fluidly coupled to the pre-filter and the air blast protection valve. The amount of activated carbon and particulate filtration media determines the capacity of the filter, and the relevant standards dictate the filter air throughput, which in turn dictates the volume and quantity of active filter media required.

The required compression forces to maintain the desired pressure acting on the adsorption filter of at least 5kN/m² certainly cannot be applied via the resilience alone of the perforated plates and heavy duty compressions springs are required. In order that these distinctions be clear, we will now describe the core elements of a prior art filter assembly for a NBC filtration system.

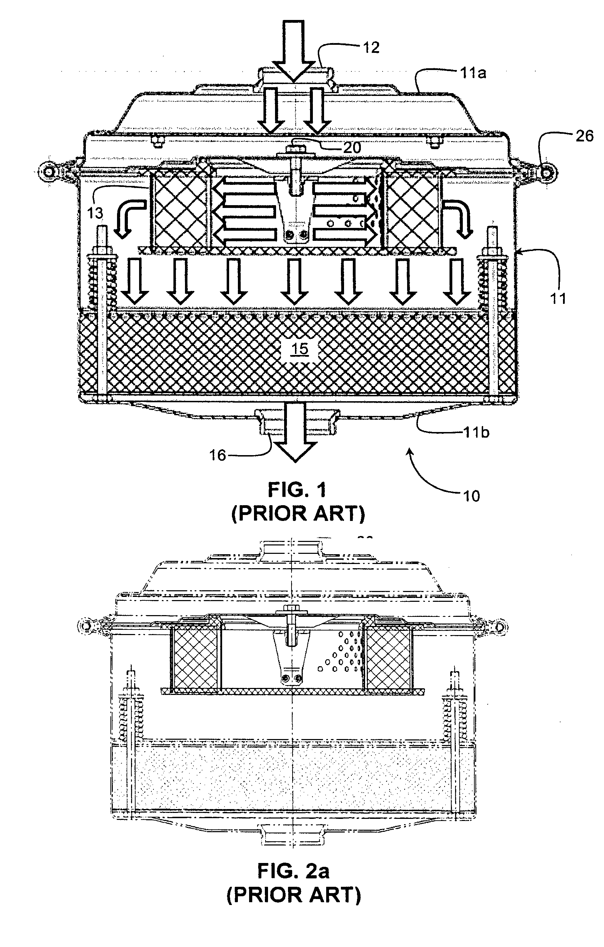

Fig. 1 is a cross-sectional view through a conventional integrated filter assembly 10 having a split casing 11 comprising upper and lower sections 11a, 11b, respectively. An air inlet 12 is coaxial with a radial particulate filter 13 mounted inside upper section 11a and an axial adsorption filter 15 is mounted in the lower section 11b of the casing. Air flow is denoted by the arrows showing that air enters the air inlet 12 into the hollow mid-section of the radial particulate filter 13. It exits through the side wall of the radial particulate filter 13 into a hollow portion separating the particulate filter 13 from the adsorption filter 15. The partially filtered air passes through the adsorption filter 15 from which clean air exits via an outlet 16 mounted in the lower section 11b of the casing. Since, of course, the filter assembly 10 may be mounted horizontally, terms "upper" and "lower" are arbitrary and we will therefore define the two sections 11a and 11b in relation to the direction of air flow as "upstream" and "downstream" sections, respectively.

The particulate filter 13 typically comprises a filter medium with HEPA (high-efficiency particulate air) or ULPA (ultra-low penetration air) properties and separates and collects significantly more than 99% of all particulates of the air stream. The filter medium is hermetically sealed within the upstream section 11a of the casing and surrounds the air inlet 12 in the upstream section 11a through which the air stream is constrained to enter. After exiting the particulate filter 13 with its annular design, the air pushes axially through the adsorption filter 15, which filters out the gas and vapor impurities of the air utilizing the adsorption capacity of activated carbon and/or other adsorption media. The air is collected downstream of the adsorption filter 15 and leaves the filter completely purified at the outlet 16.

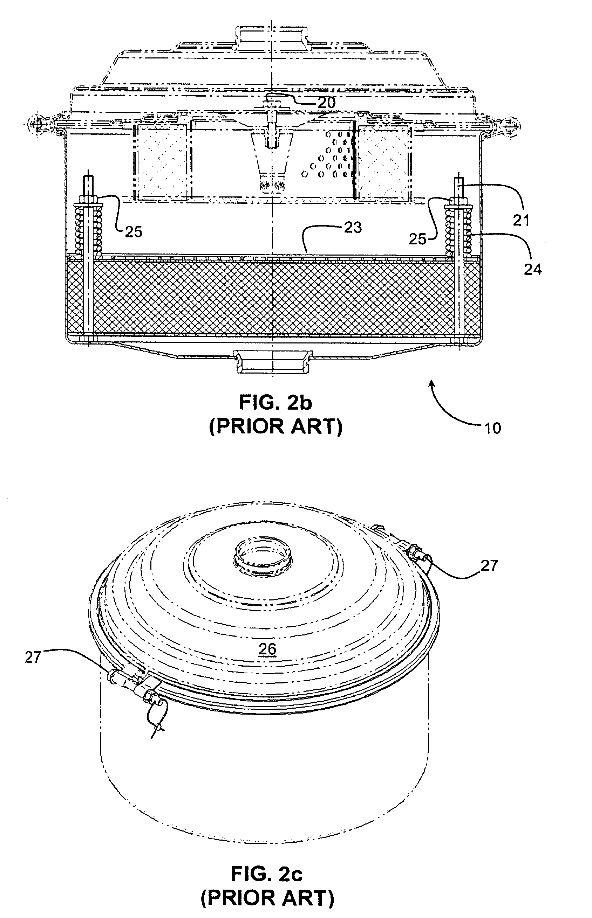

The filter assembly 10 is assembled from three separate components, each of which is manufactured independently and then assembled in three separate stages depicted in Figs. 2a, 2b and 2c.

As shown in Fig. 2a the particulate filter 13 is an integral unit that is fixed by a central screw 20 to the upstream section 11a of the casing. Fig. 2b shows that the adsorption filter 15 is secured within the downstream section 11b of the casing by a plurality of fasteners. Each fastener comprises a bolt 21 projecting upwardly (as shown) from the inside bottom surface of the downstream section 11b of the casing and which passes through the charcoal granules toward a periphery of the adsorption filter 15, such that the charcoal granules are tightly packed around the bolts 21. A resilient circular plate 23 having complementary circumferential apertures is then mounted over the bolts 21 over which are mounted coil springs 24, which are secured via nuts 25 that engage upper screw-threaded portions of the bolts. The plate 23 acts as an air inlet plate to the adsorption filter 15 and the springs 24 apply pressure to the plate 23 so as to seal the active components of the adsorption filter 15. Thus, prior to assembly, the upstream and downstream sections 11a and 11b of the casing contain their respective filters in proper orientation so that when the upstream section 11a is mounted in proper disposition relative to the downstream section 11b, the two filters are correctly positioned relative to one another i.e. they are aligned. The two sections of the casing 11 are then secured by a locking ring 26 shown in Fig. 2c by at least one fastener 27.

Assembly of such a conventional filter assembly 10 thus requires that the bolts 21 be inserted through the tightly packed charcoal granules of the adsorption filter 15 so as to mount the filter within the downstream section 11b of the casing, that the plate 23 be mounted on the protruding ends of the bolts, that there be mounted on each bolt a corresponding spring 24 and that each spring be compressed by tightening a nut 25 on to the bolt. This is a time-consuming procedure.

Furthermore, the height of the downstream section 11b is such that there is formed a significant hollow between the particulate filter 13 and the adsorption filter 15. Part of this space is occupied by the springs 24 and the fact that the required compressive force is adjusted by the nuts 25, which oblige the bolts 21 to protrude beyond the minimum height of the springs. This militates against the filter assembly having a low profile and increases the size of the fully assembled NBC filter system. As noted previously, current regulations require that the NBC filter system be stored as a fully assembled ready-to-use unit. Consequently, an NBC filter system having such a filter assembly occupies a larger space and is more difficult to store without it being obtrusive.

Even apart from considerations of compactness, known NBC filters necessitate complex assembly involving at least the following separate preassembly and integration steps of the adsorption and particulate filter assemblies, which are formed separately:
- In the adsorption filter assembly, granulated activated carbon is fixed in a defined shape to form a filtration bed that is resistant to shock and vibration and is adapted for long term storage. The granulated activated carbon is compressed by spring force between perforated metal sheets which are typically fixed to a lower part of the filter housing comprising the air outlet. The fixation is typically done by screwing, riveting and/or gluing. As noted previously, the spring force is achieved by a plurality of springs, each of which requires proper mounting of the adsorption filter assembly on the bolts, subsequent mounting of the springs and tightening nuts by suitable alignment, the application of force to the upper plate of the filter and subsequent tightening of the nuts.
- The particulate filter assembly comprises at least the filter media, holding frame, and seals. This assembly is often air-tightly fixed to an upper part of the filter housing comprising the air inlet. The fixation is typically done by screwing, riveting, and/or gluing.
- Both segments are combined with appropriate seals to form an integrated filter followed by at least one additional assembly and fixation step. Typically multiple fasteners are used as shown in Fig. 2c.

In summary, the bolts 21 retain the coil springs and ensure that the spring force is directed axially along the springs but they militate against compactness of the filter and complicate assembly thus increasing assembly time. It would clearly be beneficial if the bolts could be dispensed with, but this is not trivial because they support the springs, which are essential since it is not possible in high-volume NBC filter assemblies of the kind with which the invention is concerned to apply sufficient bias via the resiliency of the perforated plates.

### SUMMARY OF THE INVENTION

One object of the invention is therefore to provide a more compact NBC filter assembly having an air flow of between 24 and 50 m³/h. A second object is to produce the filter with fewer assembly steps and a smaller number of fasteners and associated components.

These objects are realized in accordance with the invention by an NBC filter assembly and method for manufacture thereof having the features of the respective independent claims.

In accordance with one aspect of the invention, the NBC filter assembly comprises:
a casing having first and second ends supporting an air inlet and an air outlet, respectively;
a particulate filter mounted in aligned spaced relationship with the air inlet;
an adsorption filter mounted in aligned spaced relationship with the air outlet and having a perforated air inlet plate facing the particulate filter; and
at least one spring having a first end supported within the first end of the casing and having a floating second end, said at least one spring being independent of the casing and being adapted to apply pressure to the perforated air inlet plate of the adsorption filter when the casing is sealed.

Preferably, the filter is dimensioned to achieve the same filtration efficiencies and the same pressure drop properties as a conventional NBC filter assembly in a fraction of the filter volume of a conventional NBC filter assembly, meaning that a similar amount of activated carbon is included and a sufficient amount of particulate filtration media is integrated notwithstanding the lower volume and reduced height.

The filter according to the invention accommodates the adsorption filter and the particulate filter with one major pressing assembly step that seals the filter without any further process steps. To achieve this goal various components have to be manufactured differently compared to conventional technology. The main changes are:
a) The perforated pressure plate holding the granulated activated carbon bed is produced from expanded sheet material having significantly increased thickness over know designs thus providing higher stiffness than commonly employed.
b) The springs pressing down on top of the perforated pressure plate above the granulated activated carbon bed are easily mounted as part of either the particulate filter frame or the adsorption filter frame preferably by push-fitting into preformed cavities that require no subsequent assembly or tightening.
c) The two filter housing parts are permanently connected, typically by a crimping process.

The filter assembly may be used in an integrated NBC air filtration system of reduced footprint suitable for deployment in a MAMAD or shelter, while achieving the same capacity as known NBC filters and meeting the relevant standards.

In accordance with a second aspect of the invention, there is provided a low-profile NBC filter assembly comprising: a casing dimensioned to provide an air flow of between 24 and 50 m³/h, said casing having first and second ends supporting an air inlet and an air outlet, respectively; a particulate filter mounted in aligned spaced relationship with the air inlet; an adsorption filter mounted in aligned spaced relationship with the air outlet and having a perforated air inlet plate facing the particulate filter; a plurality of bolts projecting upwardly from the second end of the casing through the perforated air inlet plate of the adsorption filter; a plurality of compression springs supported by the bolts and adapted to apply pressure to the perforated air inlet plate of the adsorption filter; and a support element mounted in association with the first end of the casing and having a plurality of cavities for accommodating a free end of the bolts when the casing is sealed thereby permitting a reduction in height of the casing such that a distance from the air inlet to the air inlet plate is no more than 100 mm.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is a cross-sectional view through a conventional prior art integrated filter assembly;
**Figs. 2a****,** **2b and 2c** show pictorially different stages in the assembly of the prior art filter assembly shown in Fig. 1; and
**Fig. 3a** is a side elevation or cross-sectional view showing pictorially a filter assembly according to an embodiment of the invention;
**Fig. 3b** is a partially exploded view of the filter assembly shown in Fig. 3a; and
**Figs. 4a and 4b** show pictorially different stages in the assembly of the filter assembly shown in Figs. 3a and 3b;
**Fig. 4c** is an enlarged view showing a detail of the filter assembly; and
**Fig. 5** is a partial cross-section showing a detail of a filter assembly according to a different embodiment of the invention.

### DETAILED DESCRIPTION OF THE INVENTION

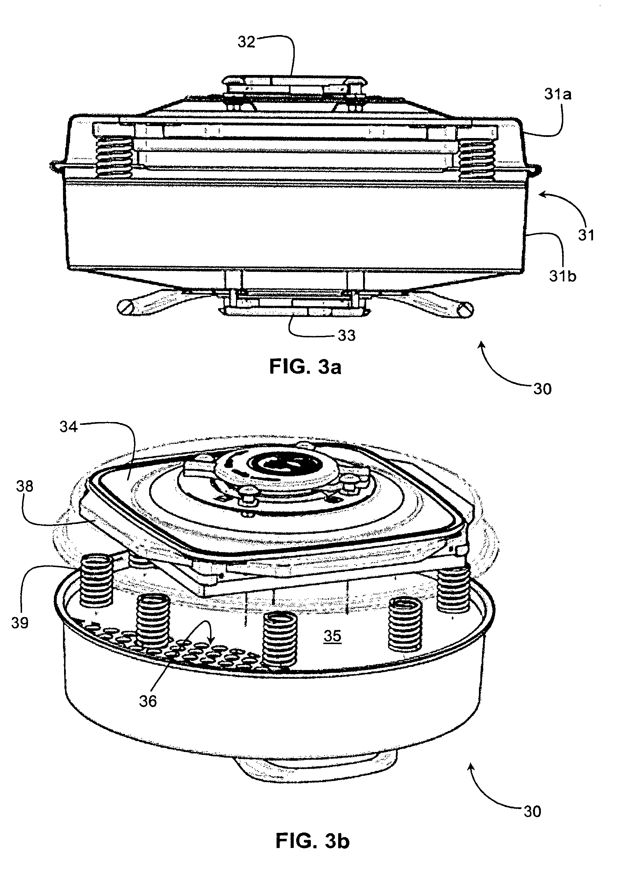

Figs. 3a to 4c show details of an NBC filter assembly 30 according to an embodiment of the invention having a reduced number of fastener elements and a reduced number of assembly steps. The filter assembly 30 comprises a split casing 31 comprising first and second segments 31a and 31b, respectively. An air inlet 32 is formed in the first segment 31a and an air outlet 33 is formed in the second segment 31b. A particulate filter 34 is mounted in the first segment 31a in proper spaced relationship with the air inlet 32 so as to be axially aligned with the inlet and an adsorption filter 35 is mounted in the second segment 31b in proper spaced relationship with the air outlet 33 so as to be axially aligned with the outlet. The adsorption filter 35 has a perforated air inlet plate 36 facing the particulate filter 34, so that pre-filtered air leaving the particulate filter 34 passes through the adsorption filter 35 prior to exiting through the outlet 33.

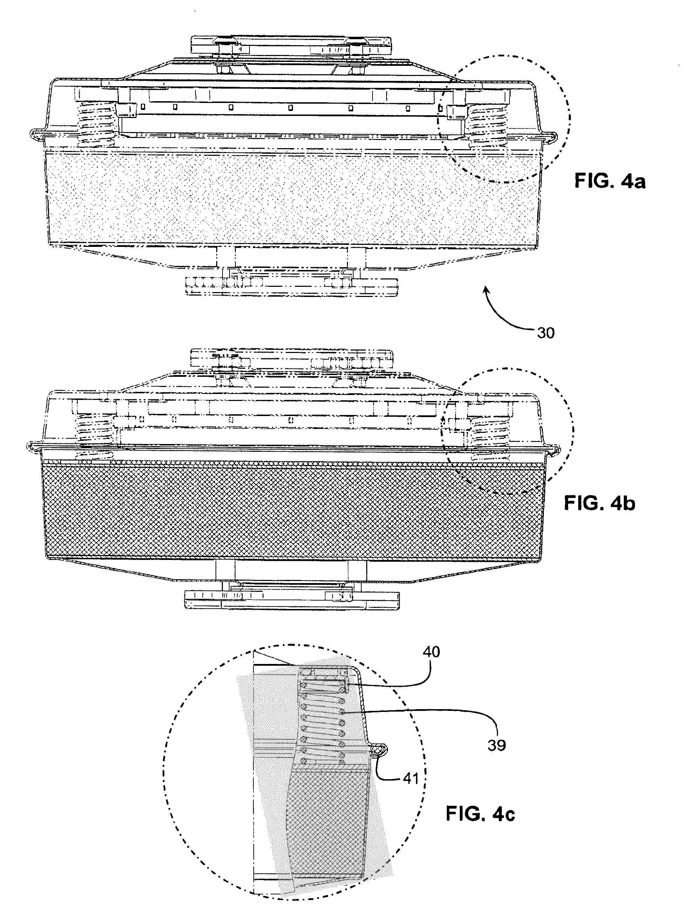

A spring support element 38 is mounted between the particulate filter 34 and the adsorption filter 35 and supports around a periphery thereof a plurality of compression springs 39 adapted to apply pressure to the perforated air inlet plate 36 of the adsorption filter 35 when the casing is sealed. As seen in Figs. 4a and 4c, the spring support element 38 may be supported by the particulate filter 34 or it may be an integral part thereof, being provided in the form of a peripheral frame formed of molded plastics and supporting recessed cavities 40 dimensioned to accommodate compression coil springs 39 by simply push-fitting the springs 39 into the cavities 40, with no further assembly or tightening being required. In such an embodiment, a first end of the coil springs is supported by the spring support element 38 while an opposite second end abutting the air inlet plate of the adsorption filter is floating. The perforated air inlet plate 36 is preferably formed of expanded metal sheet typically formed by simultaneously slitting and stretching metal sheet with one motion so as to leave diamond-shaped voids that serve as the perforations and are surrounded by interlinked bars of the metal. The inlet plate 36 is laid over an air permeable membrane, such as filter paper that retains the charcoal granules while permitting air to pass. In order for the air inlet plate 36 to be able to withstand the high compressive forces without deforming, it is formed of steel having a thickness of 3-5 mm. The compression coil springs 39 are independent of the casing in that they are not themselves part of the casing. This is distinct from the arrangement in US Patent No. 4,543,112 where the spring force is applied by the canister cover.

As noted above, the springs must withstand a minimum pressure of 5 kN/m² in order to hold the activated carbon bed effective even after vibration, shock blasts, etc. In a preferred embodiment reduced to practice, a coil spring was employed having a wire diameter of 3.5 mm and a mean coil diameter of 23.5 mm with a length of 67 mm in unstressed condition and a block length of 33 mm. The spring achieved good buckling values in combination with the holding parameters. However, these dimensions are not limiting. Likewise, it will be appreciated that other types of springs may be used such as leaf springs, wave washers or tubular springs made of elastomers or Belleville springs.

During assembly, the particulate filter 34 is mounted in the first segment 31a and the adsorption filter 35 is mounted in the second segment 31b. The springs are push-fitted into the spring support element 38 and the first segment 31a is aligned with and pressed down on to the second segment 31b. The springs 39 are heavy-duty compression springs requiring very high force to achieve the necessary compression, this being typically applied by hydraulic or pneumatic pressure applied across the two casing segments 31a and 31b. When the peripheral rims of the two casing segments 31a and 31b meet, they are sealed by a gasket (not shown) and fastened using any suitable joining means, such as crimping, knurling, rolling, crimping or pressing, gluing, welding, or soldering, and so on. Crimping requires that the rim of one of the adjacent casing segments be supplied with excess material that slightly overhangs the rim of the adjacent segment and that is then folded over to provide a permanent seal 41. This permits the filter assembly 30 to be assembled using only a single pressing and closing action and to seal the upper and lower casing segments using a sheet-forming process, like knurling, crimping or pressing. No additional fastening elements are required, such as screws, bolts, nuts, or rivets inside the filter casing or along the connection line between the adjacent rims of the two casing segments.

Typically, as shown in Fig. 4c, the spring support element 38 is a frame that surrounds the particulate filter 34, the recessed cavities 40 thus being peripheral to the particulate filter 34 and in no way reducing its footprint. However, although less satisfactory, it is also possible for the spring support element 38 to be supported by the adsorption filter 35. In such case, it is not possible to mount the spring support element 38 peripheral to the adsorption filter 35 without reducing the effective area of the adsorption filter 35, since some of the peripheral apertures of the perforated air inlet plate 36 will inevitably be blocked by the spring support element 38, thus reducing the capacity of the filter assembly.

Regardless of the location of the spring support element 38, the object of the invention is realized in that the filter can be quickly assembled with fewer assembly steps. Furthermore, by maintaining the required quantities of filtration and adsorption media it is possible also to reduce the volume and height of the filter assembly 30 to a degree not previously thought possible. In an embodiment of the invention reduced to practice based on integration of the spring support element 38 with the particulate filter 34, it was found possible to reduce both the volume and the height of the filter to about half that of conventional units. This was doing using ten springs each having an uncompressed height of 4-5 cm. The diameter of the casing was 350 mm and its height between 180-220 mm, its overall volume being approximately 14 liters. This compares with a diameter of 300 mm, a height of 500 mm and a volume of 30 liters for a conventional filter assembly of the kind shown in Fig. 1.

The reduced footprint notwithstanding, the NBC filter 30 achieves an air flow of between 24 and 50 m³/h meeting the separation and adsorption criteria of the Israeli Standard while offering a height of less than 500 mm and a volume of less than 30 liters. Volumes of less than 22 liters and even less than 18 liters have been achieved.

It will be appreciated that changes may be made to the preferred embodiments without departing from the essential inventive concept as claimed. Thus, a particularly desirable feature of the invention resides in the facility with which the necessary compression of the adsorption filter is achieved without the need to mount and compress each spring separately and independently. Furthermore, the arrangement according to the invention facilitates the necessary compression as an inherent act of assembling and securing the casing segments without the need for pre-compressing the springs. While the casing is preferably a split casing into each half of which the respective filter is pre-assembled, it will be understood that the object of the invention can be realized by mounting the components on top of one another into a sufficiently deep casing and the securing the components by mounting a cover on the open rim of the casing and securing it to the casing. This can be done by crimping or using any of the other methods described previously. It will further be understood that in the case where the particulate filter is a radial filter, it is axially symmetrical along its longitudinal axis, and so may be easily be positioned on top of the adsorption filter with the intervening springs supported by the spring support element. To this extent, preassembly of the particulate filter within the upper section of the casing is not essential to carrying out the invention.

It will also be appreciated that the arrangement as described fulfills two mutually independent objectives. One is that the filter assembly may be assembled with fewer assembly steps; and the other is that the resulting filter assembly is of a narrower profile. From the perspective of the end-user, the second requirement is dominant since it impacts on the amount of floor space that is taken up in storing the NBS filtration system prior to deployment.

Thus, although more cumbersome to manufacture, there is also provided in accordance with another aspect of the invention a low-profile NBC filter assembly, comprising a casing 31 having first and second ends 31a, 31b supporting an air inlet 32 and an air outlet 33, respectively. A particulate filter 34 is mounted in proper spaced relationship with the air inlet 32 and an adsorption filter 35 having a perforated air inlet plate 36 facing the particulate filter is mounted in proper spaced relationship with the air outlet 33.

A plurality of bolts 21 project upwardly from the second end of the casing through the perforated air inlet plate 36 of the adsorption filter 35 and support a plurality of compression springs 39 adapted to apply pressure to the perforated air inlet plate of the adsorption filter. To this end, the bolts 21 may have screw-threaded ends adapted to accommodate nuts 22 that are tightened on to the compression springs 39 in known manner. A support element 38 is mounted in association with the first end of the casing and has a plurality of cavities 40 for accommodating a free end of the bolts when the casing is sealed thereby permitting a reduction in height of the casing such that a distance from the air inlet to the air inlet plate 36 is no more than 100 mm.

The casing is dimensioned to provide an air flow of between 24 and 50 m³/h and may be a split casing having two segments with one segment accommodating the support element 38, such that when mounted on to the other segment the free ends of the bolts are accommodated within the cavities of the support element 38. This allows the dead space that is an inherent feature of the construction of the prior art filter assembly shown in Fig. 1 to be avoided and significantly reduces the profile of the filter assembly. The casing is preferably dimensioned to have a height of less than 500 mm and a volume of less than 30 liters.

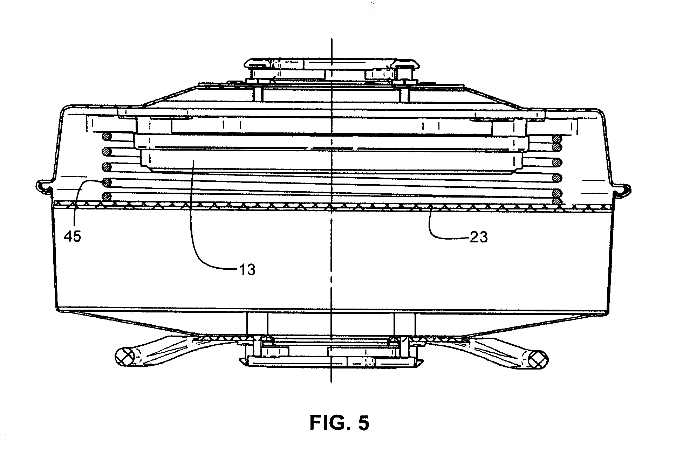

Fig. 5 is a partial cross-section showing a detail of a filter assembly according to an embodiment of the invention which is conceptually similar to the first embodiment except that instead of using multiple compression springs, a single compression spring 45 is mounted peripherally within the casing and has a hollow core for accommodating the particulate filter 13. The plate 23 may optionally being formed of expanded sheet metal.

In all embodiments, the spring support element 38 need not be a separate unit: each of the springs may be supported at its upper end by the inner surface of the casing. Thus use of the term "spring support element" is not intended to imply a discrete element but rather any surface that provides support for the free end of the spring or springs regardless of spring type.

The filter assembly according to either embodiment may be used in an integrated NBC air filtration system of reduced footprint suitable for deployment in a MAMAD or shelter, while achieving the same capacity as known NBC filters and meeting the relevant standards. The basic components of such integrated NBC air filtration systems are described above and their manner of integration is known *per se* from IL 212658 titled *"Integrated Filter Assembly for Nuclear, Biological and Chemical (NBC) Air Filtration System"* and published 11/11/2012 in the name of the present Applicant. The filter assembly described in IL 212658 is different from that of the present invention but an integrated NBC air filtration system is described in IL 212658 and a similar arrangement may employ the filter assembly according embodiments of the present invention.

## Claims

1. An NBC filter assembly (30) comprising:
a casing (31) having first and second ends (31a, 31b) supporting an air inlet (32) and an air outlet (33), respectively;
a particulate filter (34) mounted in spaced relationship with the air inlet;
an adsorption filter (35) mounted in spaced relationship with the air outlet and having a perforated air inlet plate (36) facing the particulate filter; and
at least one spring (39) having a first end supported within the first end of the casing and having a floating second end, said at least one spring (39) being independent of the casing and being adapted to apply pressure to the perforated air inlet plate of the adsorption filter when the casing is sealed.

2. The NBC filter assembly according to claim 1, wherein:
the casing (31) is a split casing having first and second segments (31a, 31b);
the air inlet is provided in the first segment (31a) and the air outlet is provided in the second segment (31b);
the particulate filter is mounted in the first segment; and
the adsorption filter is mounted in the second segment.

3. The NBC filter assembly according to claim 1 or 2, further including a spring support element mounted between the particulate filter and the adsorption filter for supporting the first end of the at least one spring.

4. The NBC filter assembly according to claim 3, wherein the spring support element (38) is supported by the particulate filter and the second end of coil springs abuts the air inlet plate (36) of the adsorption filter.

5. The NBC filter assembly according to claim 4, wherein the spring support element (38) comprises a peripheral frame formed of molded plastics and supporting recessed cavities (40) dimensioned to accommodate compression springs (39) by push-fitting the springs into the cavities, with no further assembly or tightening being required.

6. The NBC filter assembly according to any one of claims 1 to 5, wherein the air inlet plate (36) is formed of steel having a thickness of at least 3 mm.

7. The NBC filter assembly according to claim 1 or 2, wherein the spring support element (38) is supported by the adsorption filter.

8. The NBC filter assembly (30) according to any one of claims 1 to 7, wherein the at least one spring element (39) is any one of (i) a plurality of coil springs mounted peripherally within the casing, or (ii) a single coil spring mounted circumferentially within the casing around the particulate filter or (iii) a leaf spring or a Belleville spring or an elastomeric spring or a wave spring.

9. The NBC filter assembly according to any one of the preceding claims, being dimensioned to provide an air flow of between 24 and 50 m³/h and having a height of less than 500 mm and a volume of less than 30 liters.

10. A low-profile NBC filter assembly (30) comprising:
a casing (31) dimensioned to provide an air flow of between 24 and 50 m³/h, said casing having first and second ends (31a, 31b) supporting an air inlet (32) and an air outlet (33), respectively;
a particulate filter (34) mounted in spaced relationship with the air inlet;
an adsorption filter (35) mounted in spaced relationship with the air outlet and having a perforated air inlet plate (36) facing the particulate filter;
a plurality of bolts (21) projecting upwardly from the second end of the casing through the perforated air inlet plate (36) of the adsorption filter (35);
a plurality of compression springs (39) supported by the bolts and adapted to apply pressure to the perforated air inlet plate of the adsorption filter; and
a support element (38) mounted in association with the first end of the casing and having a plurality of cavities (40) for accommodating a free end of the bolts when the casing is sealed thereby permitting a reduction in height of the casing such that a distance from the air inlet to the air inlet plate (36) is no more than 100 mm.

11. The low-profile NBC filter assembly according to claim 10, wherein the casing is dimensioned to have a height of less than 500 mm and a volume of less than 30 liters.

12. The NBC filter assembly (30) according to any one of claims 1 to 11 being part of an NBC air filtration system.

13. The NBC filter assembly (30) according to claim 12, wherein the NBC air filtration system is configured for deployment in a MAMAD or shelter.

14. A method for assembling the NBC filter assembly according to any one of claims 3 to 11 when dependent on claim 3, the method comprising:
mounting the adsorption filter (35) inside the casing (31);
push-fitting the springs (39) into the cavities (40) of the spring support element (38);
mounting the particulate filter (34) on top of the adsorption filter with the springs (39) supported by the spring support element (38) intermediate the particulate filter and the adsorption filter;
mounting a cover on top of the particulate filter (34);
applying a sufficiently high compressive force between a lower end of the casing and the cover to close the casing such that respective peripheral rims of the lower end of the casing and the cover are in abutting relationship; and
sealing the abutting rims of the lower end of the casing and the cover.

15. The method according to claim 14, wherein the abutting rims are sealed by crimping, knurling, rolling, crimping or pressing, gluing, welding, or soldering.
